# EUROPEAN PATENT SPECIFICATION

(11) **EP 1 776 422 B1**
(45) Date of publication and mention of the grant of the patent: **05.03.2008**
(21) Application number: 05769959.7
(22) Date of filing: 05.08.2005
(51) Int. Cl.: C09B 45/14, G11B 7/24

(54) **ANTIPYRINE BASED AZO METAL COMPLEX DYES AND THEIR USE IN OPTICAL LAYERS FOR OPTICAL DATA RECORDING**
ANTIPYRINBASIERTE AZOMETALLKOMPLEXFARBSTOFFE UND DEREN VERWENDUNG IN OPTISCHEN SCHICHTEN FÜR OPTISCHE DATENAUFZEICHNUNG
ANTIPYRINE À BASE DE COMPLEXES MÉTALLIQUES DE COLORANTS AZOÏQUES ET LEUR UTILISATION DANS LES COUCHES OPTIQUES POUR L"ENREGISTREMENT DE DONNÉES OPTIQUES

(30) Priority: 05.08.2004 EP 04018577; 17.09.2004 EP 04022251
(43) Date of publication of application: 25.04.2007
(73) Proprietor: Clariant Finance (BVI) Limited, Road Town, Tortola (VG)
(72) Inventor: STEFFANUT, Pascal, F-68128 Village-Neuf (FR)
(74) Representative: Herrmann, Jörg
(86) International application number: PCT/EP2005/053861
(87) International publication number: WO 2006/013214

(56) References cited:
- DE-B- 1 076 078
- US-A- 2 993 884
- SHOUKRY M ET AL: "metal complexes of 2-hydroxynaphthylazoantipyrine" SYNTHESIS AND REACTIVITY IN INORGANIC AND METAL-ORGANIC CHEMISTRY, vol. 27, no. 5, 1997, pages 737-750, XP009042991 cited in the application

## Description

The present invention relates to antipyrine based azo metal complex dyes and their use in optical layers for optical data recording, preferably for optical data recording using a laser with a wavelength up to 450 nm.
The invention further relates to a write only read many (WORM) type optical recording medium capable of recording and reproducing information with radiation of blue laser, which employs an antipyrine based azo metal complex dye in the optical layer.

Recently, organic dyes have attracted considerable attention in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stability, durability for storage or non-toxicity.

For industrial application, these dyes have to be suitable for the spin coating process to prepare thin films, i.e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.
Recordable compact discs (CD-R) are widely known as a WORM type optical recording medium. Recently, digital versatile discs (DVD-R) with increased information storage capabilities up to 4.7 GBytes have been commercialized.
The DVD-R technology adopts as a light source a red diode laser with a wavelength of 630-670 nm. Thereby the pit size and track interval can be reduced, increasing the information storage capacity by up to 6-8 times compared to CD-R's.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.
Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

Antipyrazolone azo dyes of the below general formulae are known for many years (see for example DE 1076078 A and US 2,993,884):

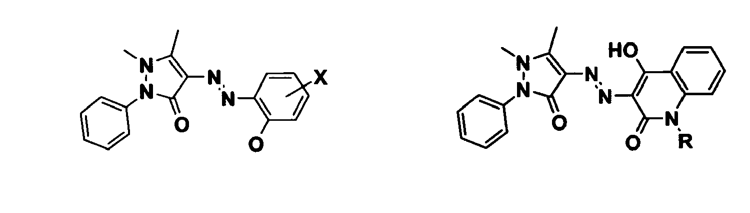

In addition to their uses as classical dyes for textiles or as dyes for copying processes, they are widely used as metallochromic indicators for spectrophotometric determination of metal contents. Extensive studies have been published on such type of complexation reactions and most of the classical aromatic diazo ligands have been investigated and described in the literature (see for example Bezdekova et al; Czech. Collection of Czechoslovak Chemical Communications, 1968, 33, 12, 4178-87 or more recently Shoukry M et al; Synthesis and reactivity in Inorganic and Metal-Organic Chemistry, 1997, 27, 5, 737-750). These azo derivatives behave generally as monobasic tridentate ligands towards metals like nickel, copper or manganese.

Antipyrine pyrazolone azo compounds are further disclosed in the following publications: Farghaly, A. M.; El-Khwass, S. M.; Khalil, M. A.; Sharabi, F. M.; Daabees, T. T. Pharmazie (1981), 36(2), 93-5; Balli, H.; Ritter, H, Dyes and Pigments (1981), 2(2), 93-124; Abou-Ouf, A. A.; Abdulla, W. A.; El-Sakka, I. A. Journal of Drug Research (1975), 7(3), 1-7). They are in particular described for their medical use inter alia as antiinflamatory or analgesic agents.
Metal complexes, in particular iron(III), palladium (II) and ruthenium (III) complexes of antipyrine pyrazolone based azo compounds are described in the following publications: Azzem, M. Abdel; El-Saied, F. A.; El-Bahnasawy, R. M.; El-Sawaf, A. K.; Egyptian Journal of Chemistry (1996), 39(3), 287-293 and EL-Saied, F. A., Polish Journal of Chemistry (1995), 69(1), 14-18.

Surprisingly it has now been found, that specific antipyrine based azo metal complex dyes as described below are useful as dye compounds in optical layers for optical data recording media.

The present invention therefore relates to antipyrine based azo metal complex dyes and to their use in an optical layer comprising antipyrine based azo metal complex dyes as described below and to the use of said optical layers for optical data recording media. More particularly, the invention relates to a write only read many (WORM) type optical data recording medium capable of recording and reproducing information with radiation of blue laser of preferably 405 nm, which employs an antipyrine based azo metal complex dye in the optical layer.

The present invention is directed to the use of a dye compound of formula (I) in an optical layer for optical data recording 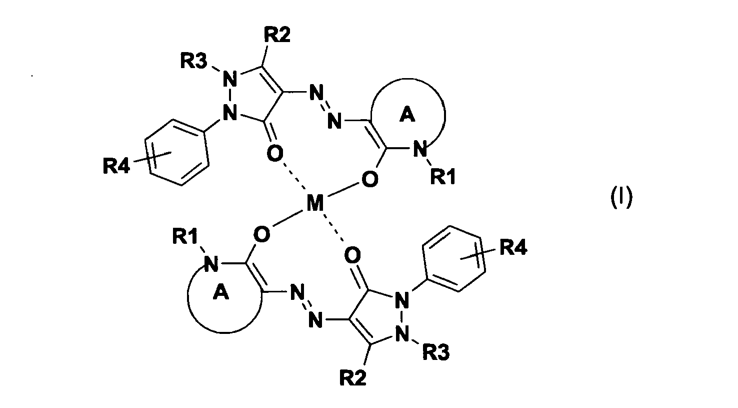 wherein
- M: represents a metal atom;
- A: is a five or six membered N-heteroaromatic cycle;
- R₁: is selected from hydrogen, C₁₋₁₀ alkyl, C₅₋₁₀ cycloalkyl, the alkyl groups being optionally substituted by halogen (Cl, Br, F, I); C₁₋₁₀ alkoxy, dialkylamino, unsubstituted phenyl or substituted phenyl (with substituents being halogen, C₁₋₁₀ alkyl or nitro), unsubstituted or substituted benzyl (with substituents being halogen, C₁₋₁₀ alkyl or nitro), carboxy, C₁₋₁₀ alkyl carboxylate or NH-aryl;
- R₂: is selected from hydrogen, C₁₋₁₀ alkyl, C₅₋₁₀ cycloalkyl, the alkyl groups being optionally substituted by halogen (Cl, Br, F, I); C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate;
- R₃: is selected from C₁₋₁₀ alkyl, C₅₋₁₀ cycloalkyl, the alkyl groups being substituted by halogen (Cl, Br, F, I) unsubstituted benzyl or substituted benzyl (with substituents being halogen, C₁₋₁₀ alkyl or nitro);
- R₄: is selected from hydrogen, -Cl, -CN, -Br, -CF₃, C₁₋₄ alkyl, chloromethyl, C₁₋₄-alkoxymethyl or phenoxymethyl, NO₂ or sulfonamide.

In a preferred aspect, the present invention is directed to a dye compound of formula (I) wherein
- M: is selected from the group consisting ofNi, Cu, Co, Zn, Al, Fe, Pd, Pt, Cr, Mn;
- A: is selected to form one of the following groups 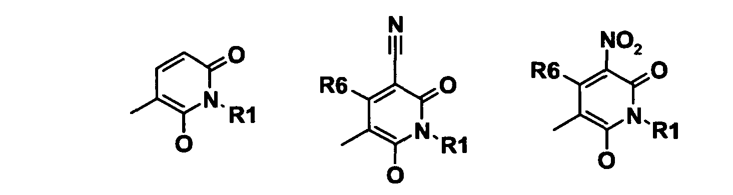 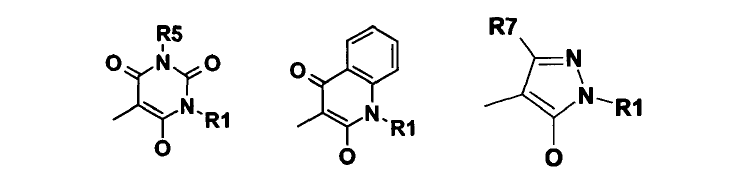
- R₁: is selected from H, CH₃, C₂H₅, C₃H₇, C₄H₉, unsubstituted phenyl or substituted phenyl (with substituents being halogen, C₁₋₁₀ alkyl or nitro) or NH-aryl;
- R₂: is selected from hydrogen, -CH₃, -C₂H₅, -CH(CH₃)₂, phenyl, -CN, -CF₃;
- R₃: is selected from C₁₋₄ alkyl, unsubstituted benzyl or substituted benzyl (with substituents being halogen, C₁₋₁₀ alkyl or nitro);
- R₄: is selected from hydrogen,-Cl, -CN, -Br, -CF₃, C₁₋₄ alkyl, chloromethyl, C₁₋₄-alkoxymethyl or phenoxymethyl, NO₂ or sulfonamide;
- R₅: is selected from H, CH₃, C₂H₅, C₃H₇, C₄H₉ or phenyl;
- R₆: is selected from H, CH₃, C₂H₅;
- R₇: is selected from hydrogen, C₁₋₁₀ alkyl, C₅₋₁₀ cycloalkyl, the alkyl groups being optionally substituted by halogen (Cl, Br, F, I); C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate;
and to the use of said compounds in an optical layer for optical data recording.

In a more preferred aspect, the present invention is directed to a dye compound of formula (I) wherein
- M: is selected from the group consisting ofNi, Cu, Co, Zn, Cr;
- A: is selected to form one of the following groups 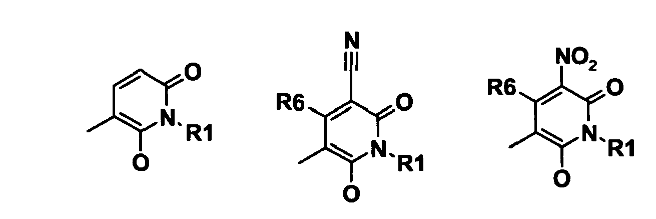 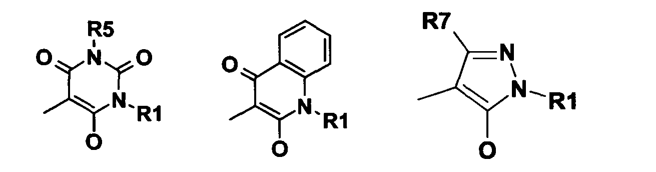 wherein
- R₁: is selected from H, CH₃, C₂H₅, C₃H₇, C₄H₉ or NH-aryl;
- R₂: is selected from H, CH₃, C₂H₅;
- R₃: is selected from H, CH₃, C₂H₅;
- R₄: is hydrogen;
- R₅: is selected from H, CH₃, C₂H₅, C₃H₇, C₄H₉ or phenyl;
- R₆: is selected from H, CH₃, C₂H₅;
- R₇: is hydrogen, CH₃, C₂H₅.
and to the use of said compounds in an optical layer for optical data recording.

In a most preferred aspect, the present invention is directed to the use of a dye compound of formula (II), (III) or (IV) in an optical layer for optical data recording 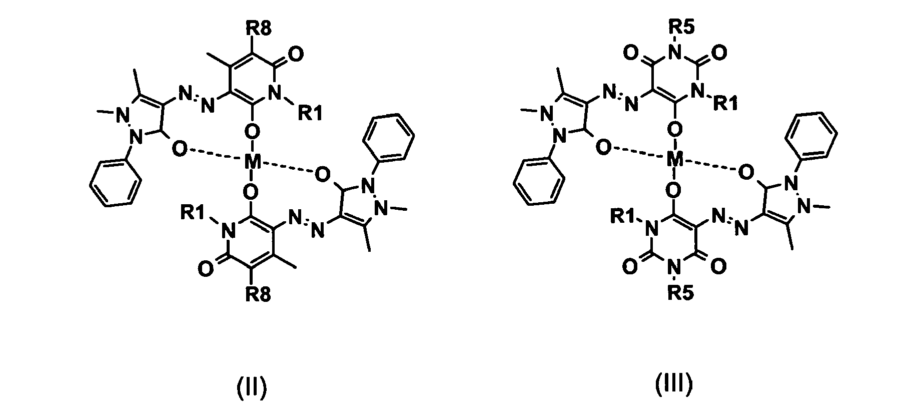 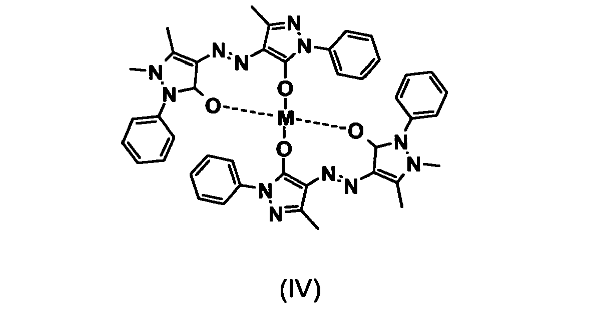 wherein
- M: is selected from the group consisting ofNi, Cu, Co, Zn, Cr;
- R₁: is selected from CH₃, C₂H₅, C₃H₇, C₄H₉ or -NH-phenyl;
- R₅: is selected from H, CH₃, C₂H₅, C₃H₇, C₄H₉ or phenyl;
- R₈: is selected from -CN or NO₂.

In another most preferred aspect, the present invention is directed to a dye compound of formula (II) or (III) wherein M, R₁, R₅ and R₈ are defined as above.

The present invention further relates to an optical layer comprising a dye compound of formula (I) as described above and to the use of said optical layer for optical data recording media. An optical layer according to the invention may also comprise a mixture of two or more, preferably of two dye compounds of formula (I) as defined above.

The antipyrine based azo metal complex dye compounds of formula (I) provide for particularly preferable properties when used in optical layers for optical data recording media according to the invention.

Further, the invention relates to a method for producing optical layers comprising the following steps
(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.
Preferred C₁₋₈ ketones are for example acetone, methylisobutylketone, methylethylketone, or 3-hydroxy-3-methyl-2-butanone.
Preferred halogen substituted C₁₋₄ alkanes are for example chloroform, dichloromethane or 1-chlorobutane.
Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-450nm, preferably around 405 nm.

### Preparation of the ligand

The coupling reaction may be carried out in aqueous and non-aqueous solvents. Non-aqueous solvents are alcohols such as methanol, ethanol, propanol, butanol, pentanol, etc., dipolar aprotic solvents such as DMF, DMSO, NMP and water-immiscible solvents such as toluene or chloro-benzene.
The coupling is preferably carried out in a stoichiometric ratio of coupling component and diazo component. The coupling is generally done at temperatures between -30°C to 100°C, preference being given to temperatures of -10°C to 30°C, and particular preference to temperatures of -5°C to 10°C.
The coupling may be carried out in an acidic as well as an alkaline medium. Preference is given to pH <10, particular preference to pH <7.0, very particular preference to pH <5.0.

### Preparation of the metal complexes (I)

Preferably, the complexes are prepared by reaction of a solution of one equivalent of a metal salt with a boiling solution of two equivalent of the corresponding dye. The precipitate is isolated following standard methods.
The solvents used in the process are preferably selected from the group consisting of C₁₋₈ alcohols, alkylnitriles, aromatics, dimethylformamide, N-methylpyrolidone or a mixture of one of these solvents with water or water itself.
Most preferred solvents used in the process are C₁₋₈ alcohols.

### Preparation of an optical layer

An optical layer according to the invention comprises a metal complex of formula (I) or a mixture of metal complexes of formula (I).
A method for producing an optical layer according to the invention comprises the following steps
(a) Providing a substrate
(b) Dissolving a dye compound or a mixture of dye compounds of formula (I) in an organic solvent to form a solution,
(c) Coating the solution (b) on the substrate (a);
(d) Evaporating the solvent to form a dye layer.

### Preparing of the high density optical recording medium

A method for producing an optical recording medium comprising an optical layer according to the invention comprises the following additional steps
(e) sputtering a metal layer onto the dye layer
(f) applying a second polymer based layer to complete the disk.

A high-density data storage medium according to the invention therefore preferably is a recordable optical disc comprising: a first substrate, which is a transparent substrate with grooves, a recording layer (optical layer), which is formed on the first substrate surface using the compounds of formula (I), a reflective layer formed on the recording layer, a second substrate, which is a transparent substrate with grooves connected to the reflective layer with an attachment layer.

The optical recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The metal complexes of formula (I) in the form of a solid film have a high refractive index at the longer wavelength flank of the absorption band, which preferably achieves a peak value of from 2.0 to 3.0 in the range of from 350 to 500 nm. They further enhance the photosensitivity and the stability to light and heat compared to dyes already known in the art.
The metal complexes of formula (I) have a decomposition temperature of 250-350°C. Additionally, these compounds show an extremely good solubility in organic solvents, which is ideal for the spin-coating process to manufacture optical layers.

Thus, it is of great advantage to use these new compounds in the recording layer of high-density recordable optical discs.

### EXAMPLES

### Examples 1-5: Dye ligands

### Diazotisation and coupling

Ligand (1): A mixture of 20.7 g of 4-aminoantipyrine, 130 ml of water and 32 g of concentrated hydrochloric acid (30%) was gradually admixed with 24.9 ml of sodium nitrite at 0°C; After 1 hour of reaction at 0°C, the violet-pink diazotization solution was added dropwise to an alkaline solution of 17.3 g of 1,4-dimethyl-3-cyano-6-hydroxypyridone while maintaining pH at 7.5-9 with sodium hydroxide (30%). The batch was stirred 3 hours then filtered with suction. The precipitate was washed with water and dried. The presscake yielded 37.2 g of dye ligand of the following formula (1).

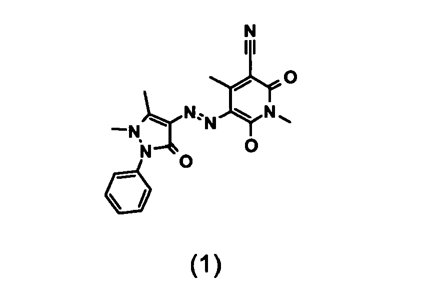

The diazotisation and coupling was repeated with other coupling components to yield dye ligands of the following formula (2)-(5).

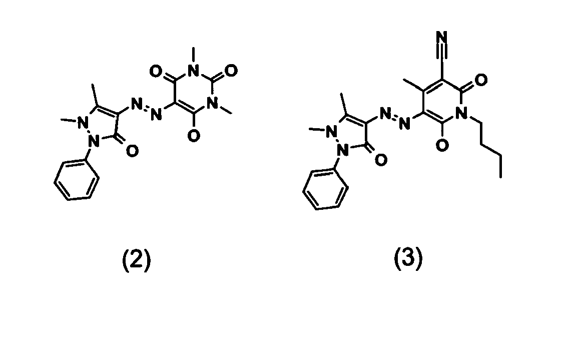

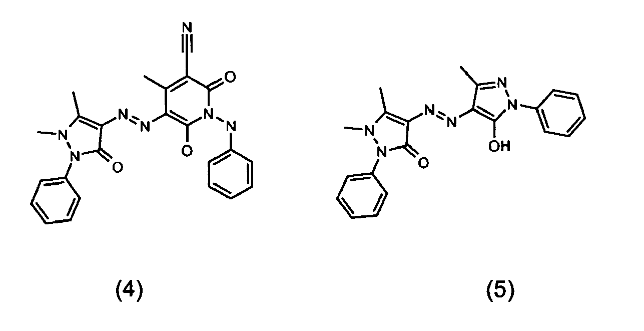

### Examples 6-13: Metal complexes of general formula (I)

7.6 g of the monoazo dyestuff (1) described in example 1 are suspended in 100 ml of ethanol together with 1.7 g of sodium acetate. After heating up to reflux, 2.5 g of nickel acetate in 35 ml of water are added for over one hour, whereupon a dark orange suspension of the nickel complex results. The dyestuff solution is cooled down to room temperature and the resulting precipitate is stirred for one hour, filtered and the residue washed salt free with deionized water and dried. 7.8 g of the compound (6) with the following formula is obtained. Yield: 96.3%.

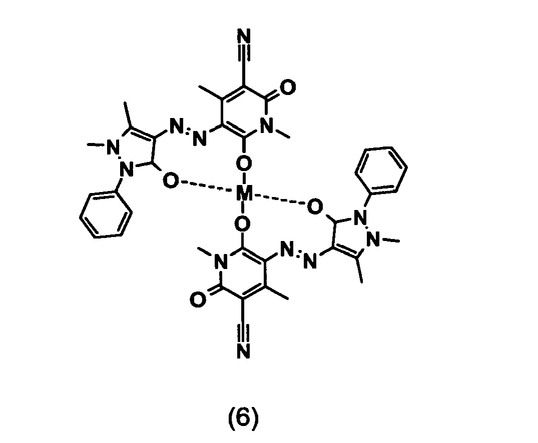

The metallisation was repeated with the other ligands of examples 2 to 5 to yield complex dye compounds of the formula (6)-(13) as given in the table below.

| Example | **M** | ligand | λ max | ε(λmax) | DP°C | HR |
|---|---|---|---|---|---|---|
| **6** | Ni | 1 | 468 | 79190 | 323 | 5 |
| **7** | Cu | 1 | 462 | 78500 | 284 | 7 |
| **8** | Ni | 2 | 412 | 63800 | 334 | 12 |
| **9** | Ni | 3 | 470 | 95800 | 331 | 7 |
| **10** | Cu | 3 | 463 | 80390 | 284 | 10 |
| **11** | Ni | 4 | 467 | 91070 | 337 | 14 |
| **12** | Zn | 4 | 473 | 76150 | 326 | 24 |
| **13** | Ni | 5 | 441 | 53400 | 298 | 25 |

| | | | | | | |
|---|---|---|---|---|---|---|
| M: metal; ε in 1/g/cm measured at λ max; DP: decomposition point in degree Celsius; HR: heat release in W/g; | | | | | | |

### Application Example

The optical and thermal properties of the amino antipyrine based azo metal complex dye compounds were studied. The dyes show high absorption at the desired wavelengths. In addition, the shape of the absorption spectra, that still remains critical to the disc reflectivity and formation of clean mark edges, are composed of one major band, comprised in a range of from 350 to 500 nm.

More precisely, n values of the refractive index were evaluated between 1.0 and 2.7 (see example 1). Light stabilities were found comparable to commercial dyes which usually are stabilized with quenchers for the use in optical data recording.

Sharp threshold of thermal decomposition within the required temperature range characterizes the new amino antipyrine based azo metal complex dyes which are assumed to be desirable for the application in optical layers for optical data recording.
As a conclusion, the amino antipyrine based azo metal complex dye compounds are within the specifications which are primarily required by the industry for the use of dyes in optical data recording, in particular in the next-generation optical data recording media in the blue laser range.

## Claims

1. Use of a dye compound of formula (I) in an optical layer for optical data recording, 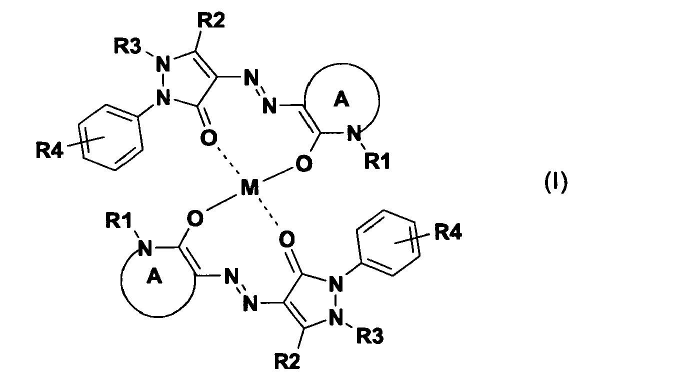 wherein
M represents a metal atom;
A is a five or six membered N-heteroaromatic cycle;
R₁ is selected from hydrogen, C₁₋₁₀ alkyl, C₅₋₁₀ cycloalkyl, the alkyl groups being optionally substituted by halogen (Cl, Br, F, I); C₁₋₁₀ alkoxy, dialkylamino, unsubstituted phenyl or substituted phenyl (with substituents being halogen, C₁₋₁₀ alkyl or nitro), unsubstituted or substituted benzyl (with substituents being halogen, C₁₋₁₀ alkyl or nitro), carboxy, C₁₋₁₀ alkyl carboxylate or NH-aryl;
R₂ is selected from hydrogen, C₁₋₁₀ alkyl, C₅₋₁₀ cycloalkyl, the alkyl groups being optionally substituted by halogen (Cl, Br, F, I); C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate;
R₃ is selected from C₁₋₁₀ alkyl, C₅₋₁₀ cycloalkyl, the alkyl groups being substituted by halogen (Cl, Br, F, I) unsubstituted benzyl or substituted benzyl (with substituents being halogen, C₁₋₁₀ alkyl or nitro);
R₄ is selected from hydrogen, -Cl, -CN, -Br, -CF₃, C₁₋₄ alkyl, chloromethyl, C₁₋₄-alkoxymethyl or phenoxymethyl, NO₂ or sulfonamide.

2. Use of a dye compound according to claim 1, wherein
M is selected from the group consisting of Ni, Cu, Co, Zn, Al, Fe, Pd, Pt, Cr, Mn;
A is selected to form one of the following groups 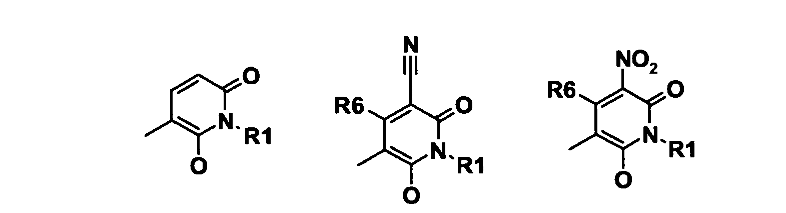 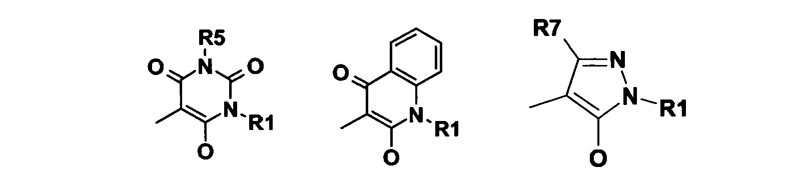
R₁ is selected from H, CH₃, C₂H₅, C₃H₇, C₄H₉, unsubstituted phenyl or substituted phenyl (with substituents being halogen, C₁₋₁₀ alkyl or nitro) or NH-aryl;
R₂ is selected from hydrogen, -CH₃, -C₂H₅, -CH(CH₃)₂, phenyl, -CN, -CF₃;
R₃ is selected from C₁₋₄ alkyl, unsubstituted benzyl or substituted benzyl (with substituents being halogen, C₁₋₁₀ alkyl or nitro);
R₄ is selected from hydrogen,-Cl, -CN, -Br, -CF₃, C₁₋₄ alkyl, chloromethyl, C₁₋₄-alkoxymethyl or phenoxymethyl, NO₂ or sulfonamide;
R₅ is selected from H, CH₃, C₂H₅, C₃H₇, C₄H₉ or phenyl;
R₆ is selected from H, CH₃, C₂H₅;
R₇ is selected from hydrogen, C₁₋₁₀ alkyl, C₅₋₁₀ cycloalkyl, the alkyl groups being optionally substituted by halogen (Cl, Br, F, I); C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate.

3. Use of a dye compound according to claim 1, wherein
M is selected from the group consisting ofNi, Cu, Co, Zn, Cr;
A is selected to form one of the following groups 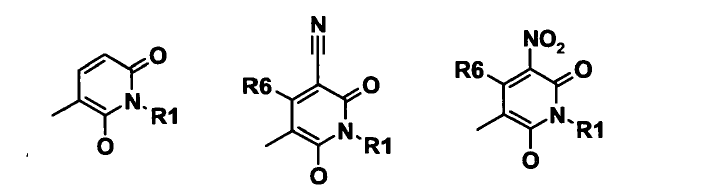 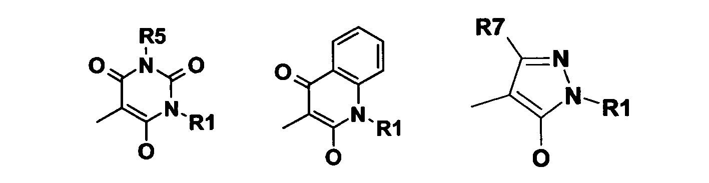
wherein
R₁ is selected from H, CH₃, C₂H₅, C₃H₇, C₄H₉ or NH-aryl;
R₂ is selected from H, CH₃, C₂H₅;
R₃ is selected from H, CH₃, C₂H₅;
R₄ is hydrogen;
R₅ is selected from H, CH₃, C₂H₅, C₃H₇, C₄H₉ or Phenyl;
R₆ is selected from H, CH₃, C₂H₅;
R₇ is hydrogen, CH₃, C₂H₅.

4. Use of a dye compound according to claim 1, wherein the dye compound is selected from formula (II), (III) or (IV) 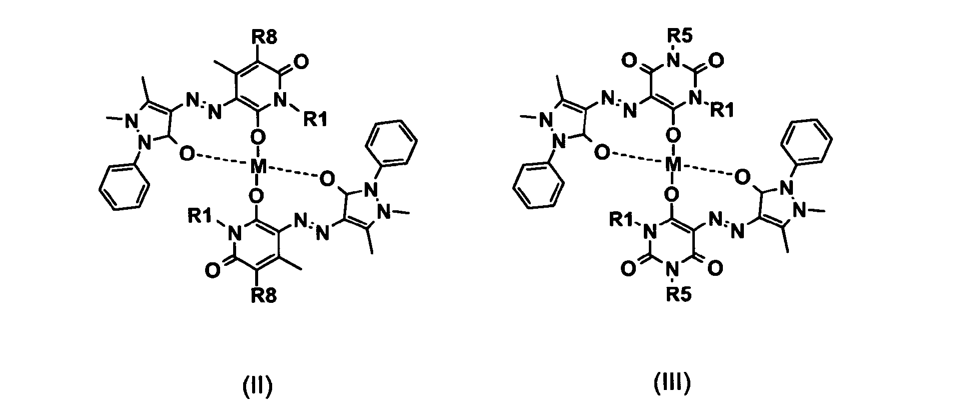 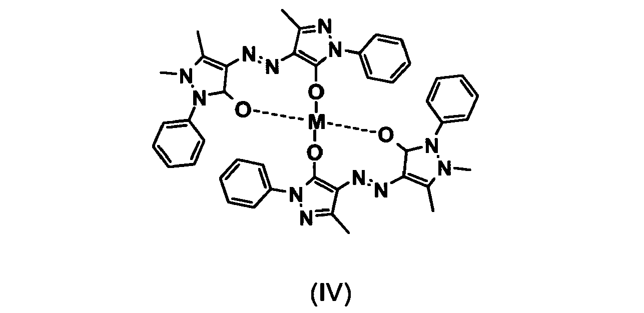 wherein
M is selected from the group consisting ofNi, Cu, Co, Zn, Cr;
R₁ is selected from CH₃, C₂H₅, C₃H₇, C₄H₉ or -NH-phenyl;
R₅ is selected from H, CH₃, C₂H₅, C₃H₇, C₄H₉ or phenyl;
R₈ is selected from -CN or NO₂.

5. An optical layer comprising at least one dye compound according to formula (I) as defined in claim 1 or a mixture of at least two dye compounds according to formula (I) as defined in claim 1.

6. A method for producing an optical layer according to claim 5, comprising the following steps
(a) providing a substrate
(b) dissolving a dye compound or a mixture of dye compounds of formula (I), as defined in claim 1 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

9. An optical recording medium comprising an optical layer according to claim 5.

10. A dye compound of formula (II) or (III) 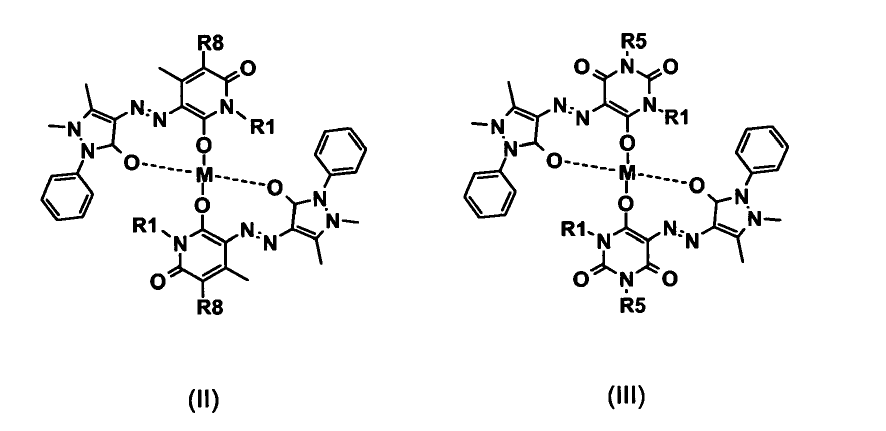 wherein
M is selected from the group consisting ofNi, Cu, Co, Zn, Cr;
R₁ is selected from CH₃, C₂H₅, C₃H₇, C₄H₉ or -NH-phenyl;
R₅ is selected from H, CH₃, C₂H₅, C₃H₇, C₄H₉ or phenyl;
R₈ is selected from -CN or NO₂.

## Patentansprüche

1. Verwendung einer Farbstoffverbindung der Formel (I) in einer optischen Schicht für die optische Datenaufzeichnung, 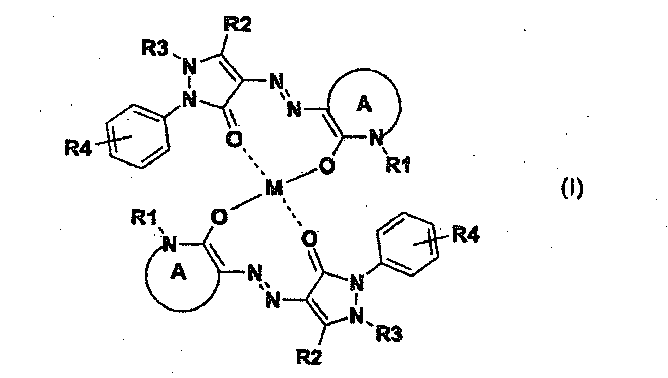 worin
M für ein Metallatom steht;
A für einen fünf- oder sechsgliedrigen N-heteroaromatischen Ring steht;
R₁ unter Wasserstoff, C₁₋₁₀-Alkyl, C₅₋₁₀-Cycloalkyl, wobei die Alkylgruppen gegebenenfalls durch Halogen (Cl, Br, F, I) substituiert sind; C₁₋₁₀-Alkoxy, Dialkylamino, gegebenenfalls substituiertem Phenyl (wobei es sich bei den Substituenten um Halogen, C₁₋₁₀-Alkyl oder Nitro handelt), gegebenenfalls substituiertem Benzyl (wobei es sich bei den Substituenten um Halogen, C₁₋₁₀ -Alkyl oder Nitro handelt), Carboxy, C₁₋₁₀-Alkylcarboxylat oder NH-Aryl ausgewählt ist;
R₂ unter Wasserstoff, C₁₋₁₀-Alkyl, C₅₋₁₀-Cycloalkyl, wobei die Alkylgruppen gegebenenfalls durch Halogen (Cl, Br, F, I) substituiert sind; C₁₋₁₀-Alkoxy, gegebenenfalls substituiertem Phenyl (wobei es sich bei den Substituenten um Halogen, C₁₋₁₀-Alkyl oder Nitro handelt), gegebenenfalls substituiertem Benzyl (wobei es sich bei den Substituenten um Halogen, C₁₋₁₀-Alkyl oder Nitro handelt), Carboxy oder C₁₋₁₀-Alkylcarboxylat ausgewählt ist;
R₃ unter C₁₋₁₀-Alkyl, C₅₋₁₀-Cycloalkyl, wobei die Alkylgruppen gegebenenfalls durch Halogen (Cl, Br, F, I) substituiert sind, gegebenenfalls substituiertem Benzyl (wobei es sich bei den Substituenten um Halogen, C₁₋₁₀-Alkyl oder Nitro handelt) ausgewählt ist;
R₄ unter Wasserstoff, -Cl, -CN, -Br, -CF₃, C₁₋₄-Alkyl, Chlormethyl, C₁₋₄-Alkoxymethyl oder Phenoxymethyl, NO₂ oder Sulfonamid ausgewählt ist.

2. Verwendung einer Farbstoffverbindung nach Anspruch 1, wobei
M aus der Gruppe bestehend aus Ni, Cu, Co, Zn, Al, Fe, Pd, Pt, Cr, Mn ausgewählt ist;
A so ausgewählt ist, daß eine der folgenden Gruppen vorliegt: 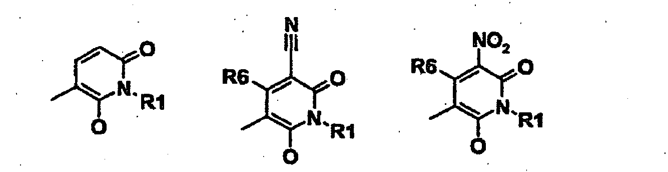 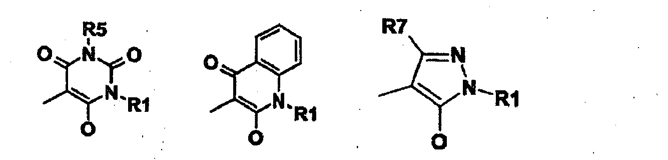
R₁ unter H, CH₃, C₂H₅, C₃H₇, C₄H₉, gegebenenfalls substituiertem Phenyl (wobei es sich bei den Substituenten um Halogen, C₁₋₁₀-Alkyl oder Nitro handelt), oder NH-Aryl ausgewählt ist;
R₂ unter Wasserstoff, -CH₃, -C₂H₅, -CH(CH₃)₂, Phenyl, -CN, -CF₃ ausgewählt ist;
R₃ unter C₁₋₄-Alkyl oder gegebenenfalls substituiertem Benzyl (wobei es sich bei den Substituenten um Halogen, C₁₋₁₀-Alkyl oder Nitro handelt) ausgewählt ist;
R₄ unter Wasserstoff, -Cl, -CN, -Br, -CF₃, C₁₋₄-Alkyl, Chlormethyl, C₁₋₄-Alkoxymethyl oder Phenoxymethyl, NO₂ oder Sulfonamid ausgewählt ist;
R₅ unter H, CH₃, C₂H₅, C₃H₇, C₄H₉ oder Phenyl ausgewählt ist;
R₆ unter H, CH₃, C₂H₅ ausgewählt ist;
R₇ unter Wasserstoff, C₁₋₁₀-Alkyl, C₅₋₁₀-Cycloalkyl, wobei die Alkylgruppen gegebenenfalls durch Halogen (Cl, Br, F, I) substituiert sind; C₁₋₁₀-Alkoxy, gegebenenfalls substituiertem Phenyl (wobei es sich bei den Substituenten um Halogen, C₁₋₁₀-Alkyl oder Nitro handelt), gegebenenfalls substituiertem Benzyl (wobei es sich bei den Substituenten um Halogen, C₁₋₁₀-Alkyl oder Nitro handelt), Carboxy oder C₁₋₁₀-Alkylcarboxylat ausgewählt ist.

3. Verwendung einer Farbstoffverbindung nach Anspruch 1, wobei
M aus der Gruppe bestehend aus Ni, Cu, Co, Zn, Cr ausgewählt ist;
A so ausgewählt ist, daß eine der folgenden Gruppen vorliegt: 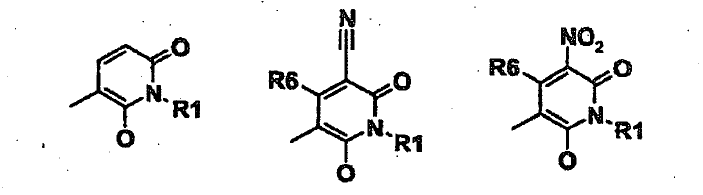 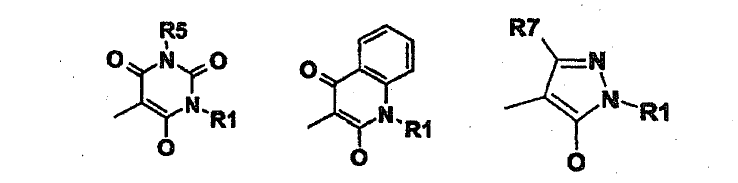
worin
R₁ unter H, CH₃, C₂H₅, C₃H₇, C₄H₉ oder NH-Aryl ausgewählt ist;
R₂ unter H, CH₃, C₂H₅ ausgewählt ist;
R₃ unter H, CH₃, C₂H₅ ausgewählt ist;
R₄ für Wasserstoff steht;
R₅ unter H, CH₃, C₂H₅, C₃H₇, C₄H₉ oder Phenyl ausgewählt ist;
R₆ unter H, CH₃, C₂H₅ ausgewählt ist;
R₇ für Wasserstoff, CH₃, C₂H₅ steht.

4. Verwendung einer Farbstoffverbindung nach Anspruch 1, wobei die Farbstoffverbindung unter Formel (II), (III) oder (IV) 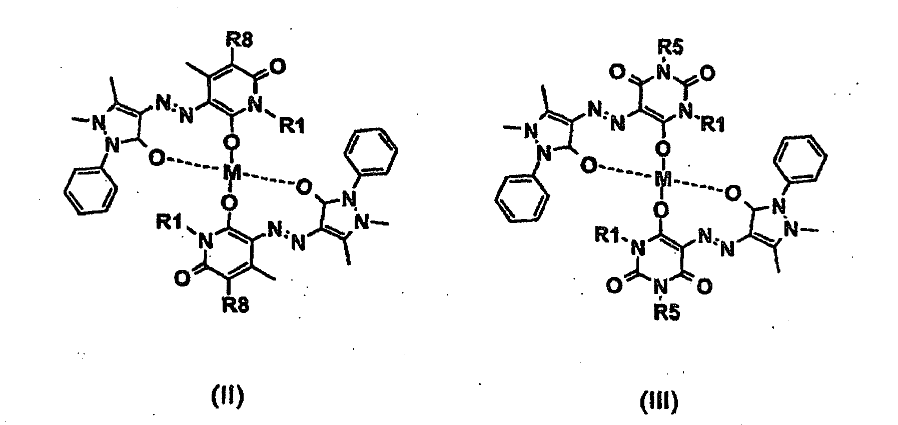 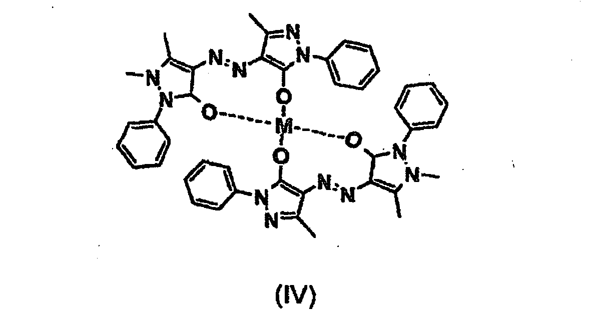 worin
M aus der Gruppe bestehend aus Ni, Cu, Co, Zn, Cr ausgewählt ist;
R₁ unter CH₃, C₂H₅, C₃H₇, C₄H₉ oder -NH-Phenyl ausgewählt ist;
R₅ unter H, CH₃, C₂H₅, C₃H₇, C₄H₉ oder Phenyl ausgewählt ist;
R₈ unter -CN oder NO₂ ausgewählt ist,
ausgewählt ist.

5. Optische Schicht, die mindestens eine Farbstoffverbindung der Formel (I) gemäß Anspruch 1 oder eine Mischung von mindestens zwei Farbstoffverbindungen der Formel (I) gemäß Anspruch 1 enthält.

6. Verfahren zur Herstellung einer optischen Schicht gemäß Anspruch 5, bei dem man
(a) ein Substrat bereitstellt,
(b) eine Farbstoffverbindung oder eine Mischung von Farbstoffverbindungen der Formel (I) gemäß Anspruch 1 in einem organischen Lösungsmittel löst, wobei man eine Lösung erhält,
(c) die Lösung (b) auf das Substrat (a) aufträgt,
(d) das Lösungsmittel verdampft, wobei man eine Farbstoffschicht erhält.

7. Verfahren nach Anspruch 6, bei dem es sich bei dem Substrat um Polycarbonat (PC) oder Polymethylmethacrylat (PMMA) handelt.

8. Verfahren nach Anspruch 6, bei dem man das organische Lösungsmittel unter C₁₋₈ -Alkohol, halogensubstituierten C₁₋₈-Alkoholen, C₁₋₈-Keton, C₁₋₈-Ether, halogensubstituiertem C₁₋₄-Alkan oder Amiden auswählt.

9. Optisches Aufzeichnungsmedium mit einer optischen Schicht gemäß Anspruch 5.

10. Farbstoffverbindung der Formel (II) oder (III) 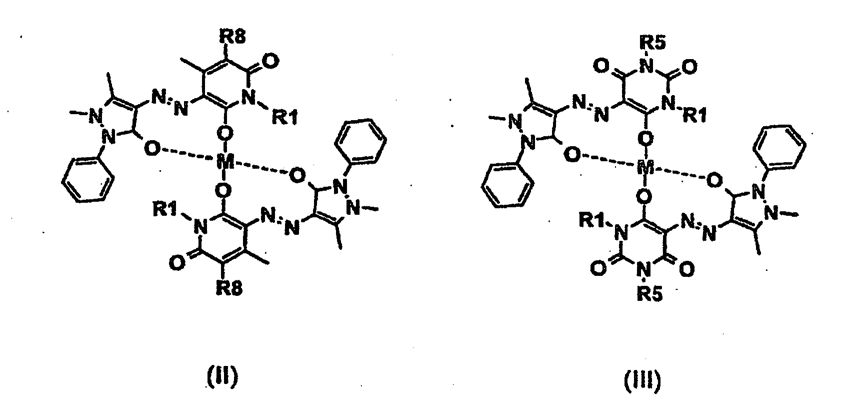 worin
M aus der Gruppe bestehend aus Ni, Cu, Co, Zn, Cr ausgewählt ist;
R₁ unter CH₃, C₂H₅, C₃H₇, C₄H₉ oder -NH-Phenyl ausgewählt ist;
R₅ unter H, CH₃, C₂H₅, C₃H₇, C₄H₉ oder Phenyl ausgewählt ist;
R₈ unter -CN oder NO₂ ausgewählt ist.

## Revendications

1. Utilisation d'un colorant de formule (I) dans une couche optique pour l'enregistrement de données optiques, 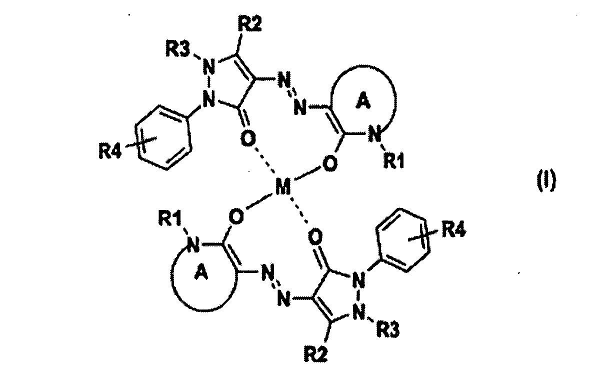 dans laquelle
M représente un atome métallique ;
A est un cycle N-hétéroaromatique à cinq ou six chaînons;
R₁ est choisi parmi l'hydrogène, les groupes alkyle en C₁₋₁₀, cycloalkyle en C₅₋₁₀ , les groupes alkyle étant éventuellement substitués par un halogène (Cl, Br, F, I), alcoxy en C₁₋₁₀, dialkylamino, phényle non substitué ou substitué (les substituants étant des halogènes, des groupes alkyle en C₁₋₁₀ ou nitro), benzyle non substitué ou substitué (les substituants étant des halogènes, des groupes alkyle en C₁₋₁₀ ou nitro), carboxyle, (alkyl en C₁₋₁₀)carboxylate, et NH-aryle ;
R₂ est choisi parmi l'hydrogène, les groupes alkyle en C₁₋₁₀, cycloalkyle en C₅₋₁₀ , les groupes alkyle étant éventuellement substitués par un halogène (Cl, Br, F, I), alcoxy en C₁₋₁₀, phényle non substitué ou substitué (les substituants étant des halogènes, des groupes alkyle en C₁₋₁₀ ou nitro), benzyle non substitué ou substitué (les substituants étant des halogènes, des groupes alkyle en C₁₋₁₀ ou nitro), carboxyle, et (alkyl en C₁₋₁₀)carboxylate ;
R₃ est choisi parmi les groupes alkyle en C₁₋₁₀, cycloalkyle en C₅₋₁₀, les groupes alkyle étant substitués par un halogène (Cl, Br, F, I), et benzyle non substitué ou substitué (les substituants étant des halogènes, des groupes alkyle en C₁₋₁₀ ou nitro) ;
R₄ est choisi parmi l'hydrogène, -Cl, -CN, -Br, -CF₃, les groupes alkyle en C₁₋₄, chlorométhyle, (alcoxy en C₁₋₄)méthyle ou phénoxyméthyle, NO₂, et sulfonamide.

2. Utilisation d'un colorant selon la revendication 1, dans laquelle
M est choisi dans le groupe constitué par Ni, Cu, Co, Zn, Al, Fe, Pd, Pt, Cr, Mn;
A est choisi pour former l'un des groupes suivants 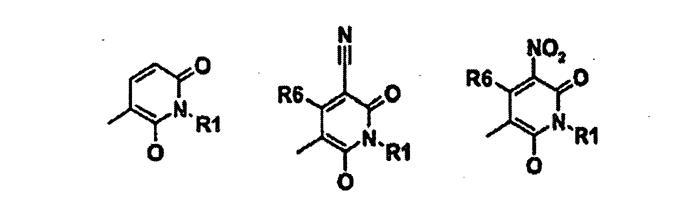 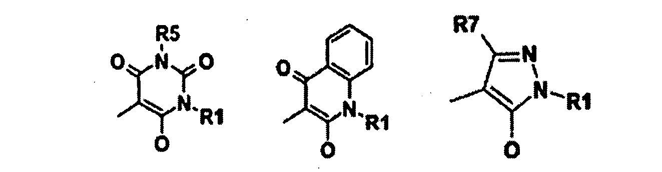
dans lesquels
R₁ est choisi parmi H, CH₃, C₂H₅, C₃H₇, C₄H₉, un groupe phényle non substitué ou substitué (les substituants étant des halogènes, des groupes alkyle en C₁₋₁₀ ou nitro), et NH-aryle ;
R₂ est choisi parmi l'hydrogène, -CH₃, -C₂H₅, -CH(CH₃)₂, le groupe phényle,-CN, et -CF₃ ;
R₃ est choisi parmi les groupes alkyle en C₁₋₄, et benzyle non substitué ou substitué (les substituants étant des halogènes, des groupes alkyle en C₁₋₁₀ ou nitro) ;
R₄ est choisi parmi l'hydrogène, -Cl, -CN, -Br, -CF₃, les groupes alkyle en C₁₋₄, chlorométhyle, (alcoxy en C₁₋₄)méthyle ou phénoxyméthyle, NO₂, et sulfonamide ;
R₅ est choisi parmi H, CH₃, C₂H₅, C₃H₇, C₄H₉, et le groupe phényle ;
R₆ est choisi parmi H, CH₃, et C₂H₅ ;
R₇ est choisi parmi l'hydrogène, les groupes alkyle en C₁₋₁₀, cycloalkyle en C₅₋₁₀ , les groupes alkyle étant éventuellement substitués par un halogène (Cl, Br, F, I), alcoxy en C₁₋₁₀, phényle non substitué ou substitué (les substituants étant des halogènes, des groupes alkyle en C₁₋₁₀ ou nitro), benzyle non substitué ou substitué (les substituants étant des halogènes, des groupes alkyle en C₁₋₁₀ ou nitro), carboxyle, et (alkyl en C₁₋₁₀)carboxylate.

3. Utilisation d'un colorant selon la revendication 1, dans laquelle
M est choisi dans le groupe constitué par Ni, Cu, Co, Zn, Cr ;
A est choisi pour former l'un des groupes suivants 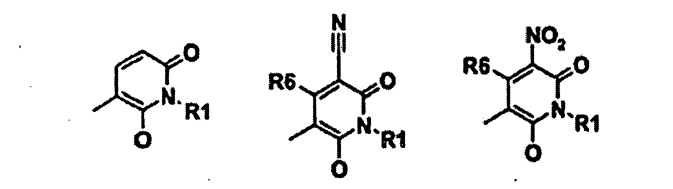 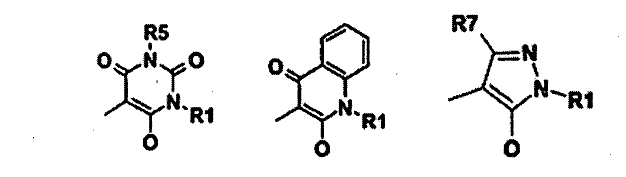
dans lesquels
R₁ est choisi parmi H, CH₃, C₂H₅, C₃H₇, C₄H₉, et le groupe NH-aryle ;
R₂ est choisi parmi H, CH₃, et C₂H₅ ;
R₃ est choisi parmi H, CH₃, et C₂H₅ ;
R₄ représente l'hydrogène ;
R₅ est choisi parmi H, CH₃, C₂H₅, C₃H₇, C₄H₉, et le groupe phényle ;
R₆ est choisi parmi H, CH₃, et C₂H₅ ;
R₇ représente l'hydrogène, CH₃, ou C₂H₅.

4. Utilisation d'un colorant selon la revendication 1, dans laquelle le colorant est choisi parmi les formules (II), (III) et (IV) 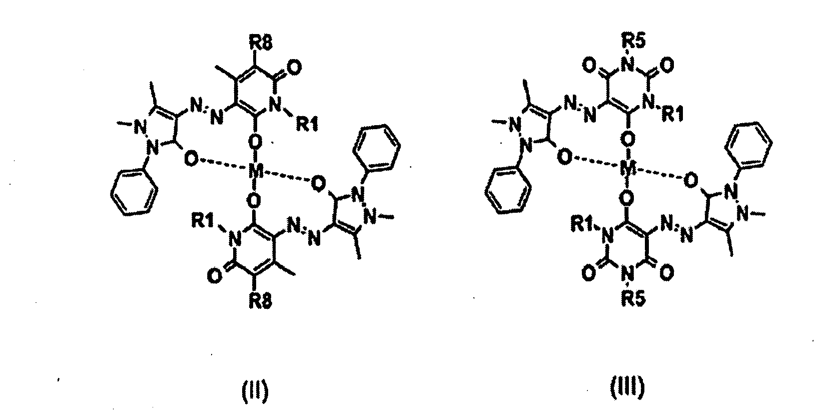 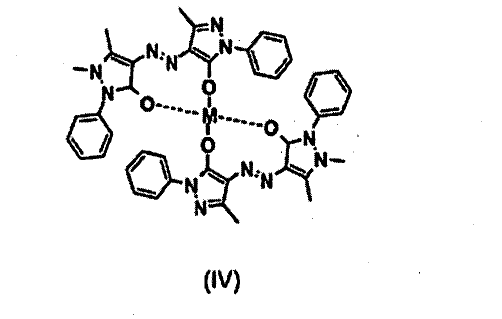 dans lesquelles
M est choisi dans le groupe constitué par Ni, Cu, Co, Zn, Cr ;
R₁ est choisi parmi CH₃, C₂H₅, C₃H₇, C₄H₉, et le groupe -NH-phényle ;
R₅ est choisi parmi H, CH₃, C₂H₅, C₃H₇, C₄H₉, et le groupe phényle ;
R₈ est choisi parmi -CN et NO₂.

5. Couche optique comprenant au moins un colorant selon la formule (I) telle que définie dans la revendication 1 ou un mélange d'au moins deux colorants selon la formule (I) telle que définie dans la revendication 1.

6. Procédé de fabrication d'une couche optique selon la revendication 5, comprenant les étapes suivantes :
(a) prévoir un substrat,
(b) dissoudre un colorant ou un mélange de colorants de formule (I), telle que définie dans la revendication 1, dans un solvant organique pour former une solution,
(c) déposer la solution (b) sur le substrat (a),
(d) évaporer le solvant pour former une couche de colorant.

7. Procédé selon la revendication 6, dans lequel le substrat est du polycarbonate (PC) ou du polyméthacrylate de méthyle (PMMA).

8. Procédé selon la revendication 6, dans lequel le solvant organique est choisi parmi les alcools en C₁₋₈, les alcools en C₁₋₈ substitués par un halogène, les cétones en C₁₋₈, les éthers en C₁₋₈, les alcanes en C₁₋₄ substitués par un halogène, et les amides.

9. Support d'enregistrement optique comprenant une couche optique selon la revendication 5.

10. Colorant de formule (II) ou (III) 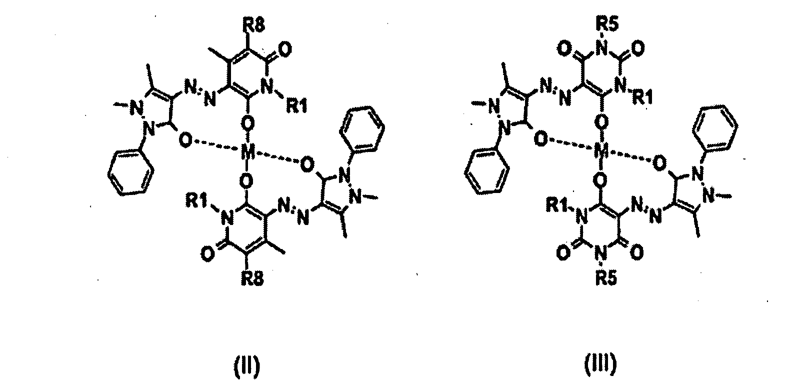 dans lesquelles
M est choisi dans le groupe constitué par Ni, Cu, Co, Zn, Cr ;
R₁ est choisi parmi CH₃, C₂H₅, C₃H₇, C₄H₉, et le groupe -NH-phényle ;
R₅ est choisi parmi H, CH₃, C₂H₅, C₃H₇, C₄H₉, et le groupe phényle ;
R₈ est choisi parmi -CN et NO₂.
